(19) Europäisches Patentamt

European Patent Office

Office européen des brevets

(11) **EP 0 712 002 B1**

(12) **EUROPÄISCHE PATENTSCHRIFT**

(45) Veröffentlichungstag und Bekanntmachung des Hinweises auf die Patenterteilung:
**21.08.2002   Patentblatt 2002/34**

(51) Int Cl.$^7$: **G01P 3/48**, G01R 23/09

(21) Anmeldenummer: **95117299.8**

(22) Anmeldetag: **03.11.1995**

(54) **Anordnung und Verfahren zur Erzeugung eines Drehzahl-Istwertsignals**

Apparatus and method for generating an instantaneous value signal of a number of revolutions

Dispositif et procédé pour générer un signal d'indication de la valeur instantanée d'un nombre de tours

(84) Benannte Vertragsstaaten:
**DE FR GB IT**

(30) Priorität: **08.11.1994   DE 9417670 U**
             **14.10.1995   DE 29516307 U**

(43) Veröffentlichungstag der Anmeldung:
**15.05.1996   Patentblatt 1996/20**

(73) Patentinhaber: **PAPST-MOTOREN GmbH & Co. KG**
**78106 St Georgen (DE)**

(72) Erfinder:
• **Lukenich, Stefan**
  **D-78224 Singen (DE)**
• **von der Heydt, Thomas**
  **D-78112 St.Georgen (DE)**
• **Rappenecker, Hermann Dipl.-Ing.**
  **D-78147 Vöhrenbach (DE)**

(56) Entgegenhaltungen:
DE-A- 2 231 513          DE-A- 2 314 017
DE-A- 3 202 818          US-A- 4 544 852
US-A- 4 908 572          US-A- 5 241 267

EP 0 712 002 B1

## Beschreibung

Die Erfindung betrifft ein Verfahren zur Erzeugung eines analogen Drehzahl-Istwertsignals aus einem digitalen oder quasi-digitalen Signal. Sie betrifft ferner eine Anordnung zur Durchführung eines solchen Verfahrens.

Bei elektronisch kommutierten Motoren (ECM) verwendet man oft das Ausgangssignal eines Rotorstellungssensors als Drehzahlsignal. Meist wird als Rotorstellungssensor heute ein Hall-IC verwendet, dessen Ausgangssignal während einer Rotordrehung von 180° el. hoch und während einer anschließenden Rotordrehung von 180° el. niedrig ist. Die Frequenz dieses digitalen Signals ist ein direktes Maß für die Drehzahl.

Für Zwecke der Drehzahlregelung ist ein solches digitales Signal wenig geeignet, besonders bei niedrigen Drehzahlen.

Aus der US-A-4,544,852 kennt man eine Anordnung zur Erzeugung eines Alarmsignals für einen Elektromotor, um anzuzeigen, wenn dieser Motor zu langsam läuft oder durch eine Blockierung stillsteht. Ein Tachogenerator oder eine Sensorspule erzeugt ein rechteckförmiges Signal, und dieses wird differenziert, so dass Nadelimpulse entstehen, welche ein Entladeglied steuern, das zu einem Kondensator parallelgeschaltet ist. Letzterer wird ständig mit einem im wesentlichen konstanten Strom geladen, und wegen der periodischen Entladung durch das Entladeglied entsteht an ihm eine Sägezahnspannung, deren Amplitude bei niedrigen Drehzahlen hoch und bei hohen Drehzahlen niedrig ist. Diese Sägezahnspannung wird einem ersten Schwellwertglied zugeführt, an dessen Ausgang man bei niedrigen Drehzahlen lange Impulse mit niedriger Frequenz und bei hohen Drehzahlen kurze Impulse mit hoher Frequenz erhält, und diese Impulse werden durch ein Integrierglied integriert, so dass man dort - mit entsprechender zeitlicher Verzögerung - ein analoges Signal erhält, dessen Amplitude mit steigender Drehzahl abnimmt. Dieses Signal wird einem zweiten Schwellwertglied zugeführt, das ein Alarmsignal erzeugt, wenn das analoge Signal zu hoch, also die Motordrehzahl zu niedrig geworden ist.

Ferner kennt man aus der DE-A1-3 202 818 ein Verfahren und eine Anordnung zur Aufbereitung eines Luftdurchsatzsignals bei einer Brennkraftmaschine. Bei geöffneter Drosselklappe treten im Luftansaugtrakt einer Brennkraftmaschine starke Pulsationen auf, die ein entsprechendes pulsierendes Luftdurchsatzsignal zur Folge haben, das schlecht weiterverarbeitet werden kann. Deshalb wird - bei konstanter Drosselklappenstellung - von diesem gemessenen Signal eine Wechselkomponente abgespalten und vom gemessenen Signal subtrahiert, um ein verbessertes Messsignal für die Weiterverarbeitung zu erhalten.

Es ist eine Aufgabe der Erfindung, ein neues Verfahren und eine neue Anordnung zur Erzeugung eines analogen Drehzahl-Istwertsignals aus einem digitalen oder im wesentlichen digitalen Signal bereitzustellen.

Nach der Erfindung wird diese Aufgabe gelöst durch ein Verfahren gemäß Anspruch 1. Ein solches Verfahren hat den Vorteil, dass das digitale oder im wesentlichen digitale Signal in ein analoges Drehzahl-Istwertsignal umgesetzt wird, wobei ein hohes Drehzahl-Istwertsignal einer hohen Drehzahl entspricht, so dass dieses Signal in einfacher weise verarbeitet werden kann und auch bei hohen Drehzahlen eine genaue Messung möglich ist. Diese Umsetzung geschieht im wesentlichen ohne Zeitverzögerung, was z.B. bei einem Regelvorgang ein rasches Ansprechen des Reglers auf Drehzahländerungen ermöglicht. Dies ist besonders wichtig für Regelvorgänge bei niedrigen Drehzahlen eines Motors.

Eine bevorzugte Ausgestaltung der Erfindung ergibt sich durch ein Verfahren gemäß Anspruch 2. Mit einer linearen Abhängigkeit zwischen dem Drehzahl-Istwertsignal und der Drehzahl lassen sich insbesondere Regler gut realisieren.

Eine erfindungsgemäße Anordnung ist Gegenstand des Anspruchs 5. Sie hat den Vorteil, dass Tiefpassfilter oder dergleichen meist entfallen können, so dass eine Drehzahländerung praktisch ohne zeitliche Verzögerung in eine Änderung des analogen Drehzahl-Istwertsignals umgesetzt wird. Dies ist besonders wichtig für Regelvorgänge bei niedrigen Drehzahlen eines Motors. Das Drehzahl-Istwertsignal, welches die Form einer im wesentlichen mit der Drehzahl ansteigenden Gleichspannung hat, führt zu einer hohen Genauigkeit der Drehzahlmessung bei hohen Geschwindigkeiten. Das zur Differenzbildung ausgebildete Organ wird hierbei bevorzugt als Operationsverstärker ausgebildet.

Eine bevorzugte Ausgestaltung der Erfindung gemäß Anspruch 7 ist dadurch gekennzeichnet, dass der Wert des Kondensators und des ihm zugeordneten Entladewiderstands so gewählt ist, dass sich im interessierenden Drehzahlbereich eine im wesentlichen lineare Beziehung zwischen dem analogen Drehzahl-Istwertsignal und der Drehzahl eines zu regelnden Motors ergibt. Eine solche lineare Beziehung wird bei vielen Anwendungen verlangt, und sie kann durch geeignete Wahl der Größe des Kondensators und des ihm zugeordneten Entladewiderstands in einfacher Weise erreicht werden.

Eine Verbesserung, besonders bei niedrigen Drehzahlen, ergibt sich durch die Maßnahme nach Anspruch 10, da sich hierdurch die Frequenz des schräge Flanken aufweisenden Signals verdoppelt.

Eine weitere Verbesserung, speziell bei niedrigen Drehzahlen eines zu regelnden Motors, ergibt sich durch den Gegenstand des Anspruchs 11, da hierdurch die Frequenz des digitalen Signals erhöht wird, was die Auswertung vereinfacht und verbessert.

Eine weitere Lösung der gestellten Aufgabe ergibt sich durch den Gegenstand des Anspruchs 12, wobei sich eine weitere Verbesserung, besonders bei niedrigen Drehzahlen, durch den Gegenstand des Anspruchs 13 ergibt.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den übrigen Unteransprüchen. Es zeigt:

| | |
|---|---|
| Fig. 1 | eine Prinzipdarstellung eines dreisträngigen elektronisch kommutierten Motors und einer zugeordneten Drehzahlregeleinrichtung, sowie der zugehörigen Anordnung zur Erzeugung eines drehzahlabhängigen analogen Signals, |
| Fig. 2 | ein Schaltbild, welches eine bevorzugte Anordnung zur Umsetzung von digitalen oder annähernd digitalen Signalen in ein äquivalentes analoges Signal darstellt, |
| Fig. 3 | Schaubilder zur Erläuterung der Anordnung nach Fig. 2, |
| Fig. 4 | eine graphische Darstellung, welche zeigt, wie in einem beispielhaften Bereich zwischen 1000 und 8000 U/min die Beziehung zwischen der Drehzahl und dem analogen Drehzahl-Istwertsignal linearisiert werden kann, |
| Fig. 5 | eine Schaltung zur Addition der Signale an drei Sensoren 15, 16 und 17 eines elektronisch kommutierten Motors, und zur optimierten Auswertung des dabei entstehenden Summensignals, |
| Fig. 6 | Schaubilder zur Erläuterung der Schaltung nach Fig. 5, |
| Fig. 7-9 | Oszillogramme zur Erläuterung der Schaltung nach Fig. 5, |
| Fig. 10 | ein Schaltbild einer Variante, die nicht Teil den der Erfindung ist, und |
| Fig. 11 bis 13 | Oszillogramme zur Erläuterung der Schaltung nach Fig. 10. |

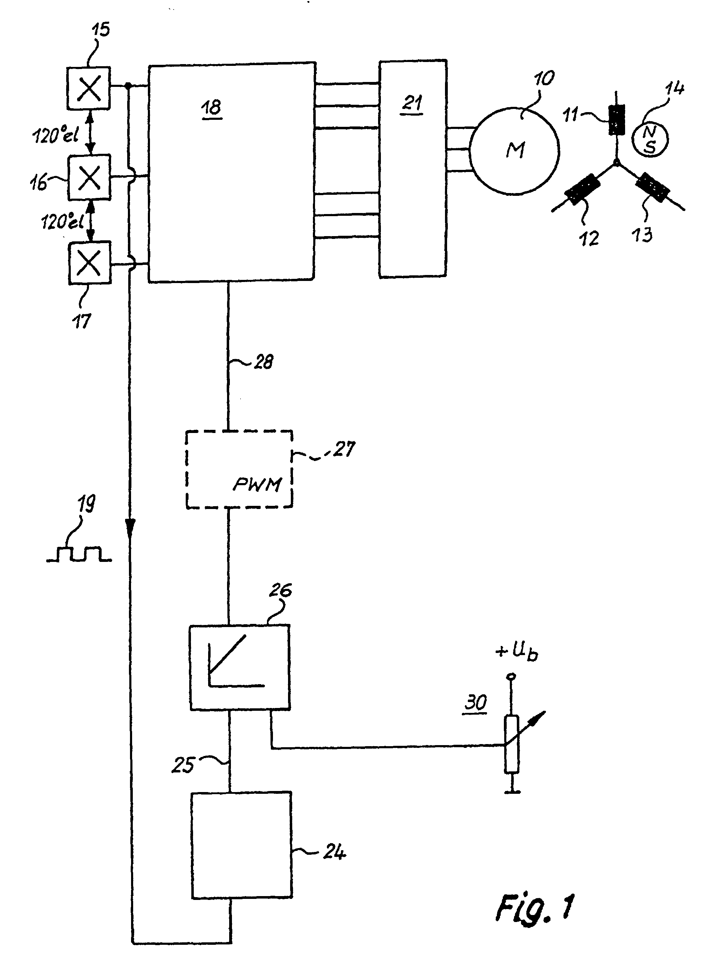

Fig. 1 zeigt schematisch eine Anordnung zur Drehzahlregelung eines elektronisch kommutierten Motors 10, im folgenden ECM 10 genannt, der beispielhaft drei Stränge 11, 12, 13 in Stern- oder Dreieckschaltung, sowie einen permanentmagnetischen Rotor 14, aufweisen kann. Dieser Motor 10 enthält auch drei Hall-ICs 15, 16 und 17, welche dazu dienen, die Kommutierung des ECM 10 zu steuern. Diese Hall-ICs haben voneinander jeweils einen Abstand von 120° el., wie in Fig. 1 symbolisch angedeutet.

Gemäß Fig.1 dient das Ausgangssignal 19 des Hall-IC 15 zusätzlich als digitales Drehzahl -Istwertsignal. Es ist in Fig. 3a dargestellt. Seine Periodendauer T ist zur Drehzahl N des ECM 10 umgekehrt proportional. Alternativ können gemäß Fig. 5 die Ausgangssignale aller drei Hall-ICs 15, 16 und 17 zur Drehzahlregelung verwendet werden, wodurch sich noch eine wesentliche Verbesserung der Qualität der Drehzahlregelung ergibt, was besonders bei niedrigen Drehzahlen einen großen Vorteil darstellt.

Die Signale der Hall-ICs 15, 16 und 17 werden einer Kommutierungsschaltung 18 zugeführt. Diese bestimmt, welcher der Stränge 11, 12 und/oder 13 im Augenblick Strom erhält, und sie bestimmt ferner - in Abhängigkeit von der Drehzahl -, wie lange der betreffende Strang Strom erhält, oder wie hoch dieser Strom ist, um so eine gewünschte Drehzahl einzuhalten. Die Kommutierungsschaltung 18 ist nicht im einzelnen dargestellt, da der Aufbau derartiger Schaltungen in vielfältigen Varianten bekannt ist.

Die Kommutierungsschaltung 18 steuert eine Endstufe 21, die bevorzugt als Brückenschaltung aufgebaut ist und die ebenfalls nicht dargestellt ist. Es gibt eine Vielzahl bekannter Brückenschaltungen (Halbbrücken, Vollbrücken) für diesen Zweck. Die drei Stränge 11, 12 und 13 sind an diese Brückenschaltung angeschlossen. Derartige Brückenschaltungen sind z.B. dargestellt in "asr-digest für angewandte Antriebstechnik", Heft 1 bis 2, 1977, Seiten 27 bis 31.

Das Signal 19 vom Hall-IC 15 wird einer Auswerteschaltung 24 zugeführt, deren Funktion es ist, das digitale oder annähernd digitale Signal 19 in ein analoges Signal an seinem Ausgang 25 umzuwandeln. Das analoge Signal wird beim Ausführungsbeispiel anschließend einem PI-Regler 26 für die Drehzahlregelung des ECM 10 zugeführt, und das Ausgangssignal des PI-Reglers 26 steuert, z.B. über eine Impulsbreitensteuerung 27, und über eine Verbindung 28 die Kommutierungsschaltung 18. Dem PI-Regler 26 wird auch, wie dargestellt, von einem Potentiometer 30 ein Signal für die gewünschte Drehzahl zugeführt, das sogenannte Drehzahl-Sollwertsignal.

Im Regler 26 wird also das Sollwertsignal vom Potentiometer 30 mit dem analogen Istwertsignal von der Auswerteschaltung 24 verglichen, und die Drehzahl des ECM 10 wird entsprechend geregelt. Naturgemäß eignet sich die Erfindung in gleicher Weise zur Drehzahlregelung von anderen Motoren, z.B. von Gleichstrommotoren mit Kollektor, oder generell zur Drehzahlregelung bei sich drehenden Teilen.

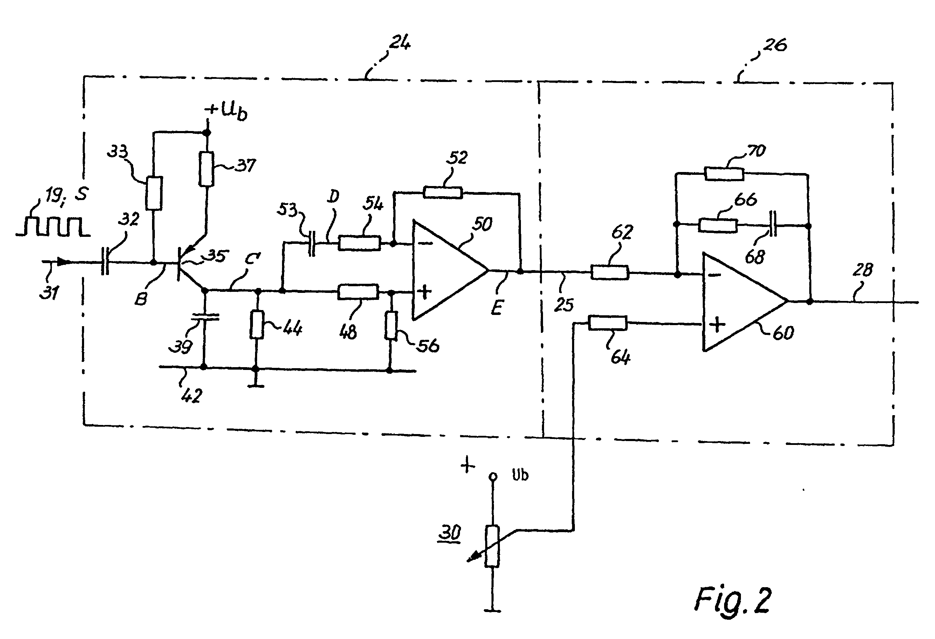

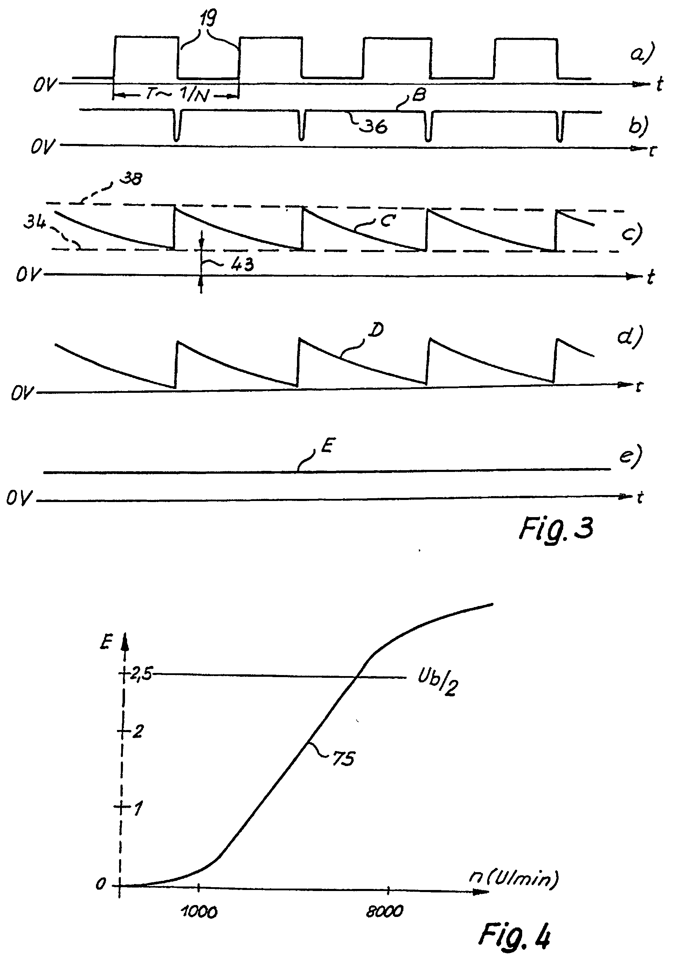

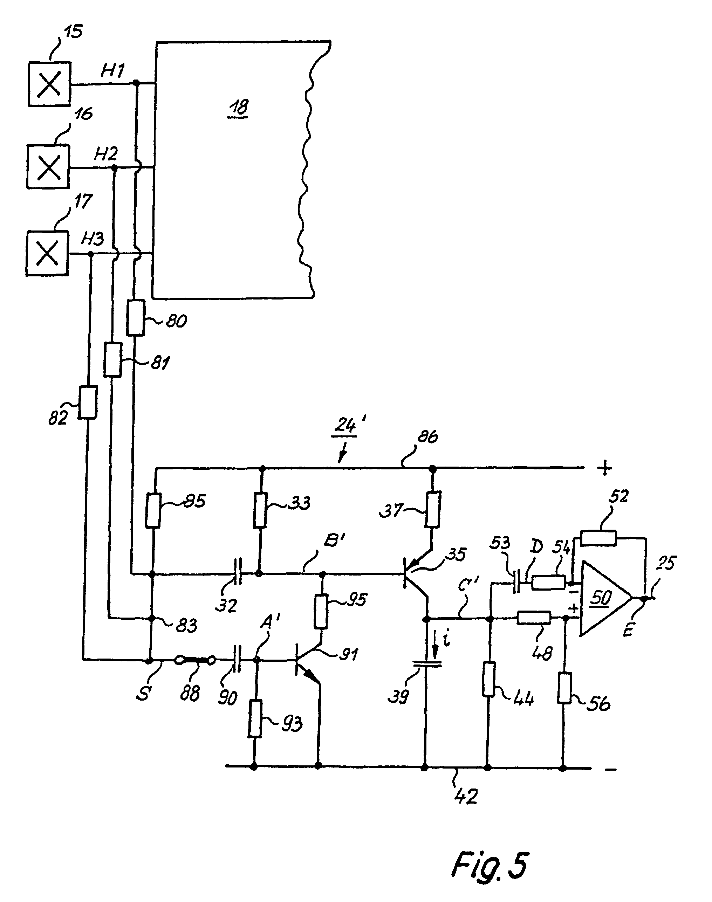

Fig. 2 zeigt im einzelnen den Aufbau einer ersten Ausführungsform der Auswerteschaltung 24 und des Reglers 26. Die Signale 19 vom Hall-IC 15 werden über einen Eingang 31 einem Differenzierglied zugeführt, das aus einem Kondensator 32 und einem Widerstand 33 besteht, welch letzterer an die positive Leitung (+ $U_b$) angeschlossen ist. Am Ausgang B des Differenzierglieds 32, 33, also an der Basis eines pnp-Transistors 35, erhält man folglich negative Nadelimpulse 36 (Fig. 3b) bei jeder negativen Flanke des digitalen Drehzahlsignals 19. Diese Impulse 36 machen jeweils kurzzeitig den Transistor 35 leitend, so daß über dessen Emitterwiderstand 37 kurzzeitig ein Stromimpuls zu einem Kondensator 39 fließt, der zwischen dem Kollektor des Transistors 35 und der negativen Leitung 42 angeordnet ist, und zu dem ein Entladewiderstand 44 parallelgeschaltet ist. Im Betrieb lädt sich dabei der Kondensator 39 jedesmal durch den Stromimpuls praktisch auf die positive Spannung $U_b$ auf, die in Fig. 3c als gestrichelte Linie 38 angedeutet ist. - Alternativ kann der Transistor 35 zusätzlich auch bei jeder positiven Flanke des digitalen Drehzahlsignals 19 kurzzeitig leitend gesteuert werden, was besonders bei niedrigen Drehzahlen sehr vorteilhaft ist. Diese Variante ist in Fig. 5 dargestellt.

Da sich der Kondensator 39 nach jeder Ladung (über den Transistor 35) wieder über den Entladewiderstand 44 entlädt, ergibt sich an der Stelle C, also am Kollektor des Transistors 35, eine etwa sägezahnförmige Spannung C mit einer Frequenz, die der Drehzahl N des ECM 10 proportional ist. Diese Spannung ist in Fig. 3c dargestellt. Wird der Transistor 35 zusätzlich auch bei jeder positiven Flanke des Signals 19 leitend gesteuert, was in Fig. 5 dargestellt ist, so verdoppelt sich die Frequenz der sägezahnförmigen Spannung am Punkt C.

Das Maß, um das der Kondensator 39 über den Widerstand 44 entladen wird, ist eine Funktion der Periodendauer T (Fi.g 3a): Je größer T ist, d.h. je niedriger die Drehzahl N ist, desto stärker wird der Kondensator 39 entladen, und je höher die Drehzahl N ist, umso weniger wird er entladen.

In Fig. 3c ist das tiefste Potential, auf das der Kondensator 39 bei der dargestellten Drehzahl entladen wird, mit 34 bezeichnet. Dieses Potential steigt mit steigender Drehzahl N an, d.h. der Signalhub 43 (Fig. 3c) nimmt mit steigender Drehzahl zu, weil die Differenz zwischen den Potentialen 38 und 34 mit steigender Drehzahl N abnimmt. Das Potential 38 verändert sich dabei praktisch nicht, d.h. es entspricht im wesentlichen der Spannung $U_b$.

Hat der ECM 10 einen zweipoligen Rotor 14, so beträgt bei N = 3000 U/min die Frequenz des Signals 19 nur 50 Hz, d.h. hier müssen Signale mit sehr niedrigen Frequenzen verarbeitet werden. Würde man die Spannung am Punkt C durch ein Tiefpaßfilter glätten, was sonst in einem solchen Fall übliche Technik ist, so würde bei einer Drehzahländerung eine erhebliche Zeitverzögerung auftreten, bevor das Ausgangssignal eines solchen Tiefpaßfilters der aktuellen Drehzahl entsprechen würde. Auch wäre hierfür ein großer Aufwand an Bauteilen erforderlich.

Die Erfindung geht deshalb einen anderen Weg, und zwar wird das Signal C am Punkt C, das in Fig. 3c dargestellt ist, über einen Widerstand 48 direkt dem Pluseingang eines Operationsverstärkers 50 zugeführt, der auch über einen Widerstand 56 mit der Minusleitung 42 verbunden ist. Das Signal am Pluseingang des Operationsverstärkers 50 enthält also sowohl den Wechselanteil wie den Gleichanteil des Signals C am Punkt C. Der Operationsverstärker 50 arbeitet hier als Subtrahierglied, nämlich als Differenzverstärker mit einem Verstärkungsfaktor V = 1.

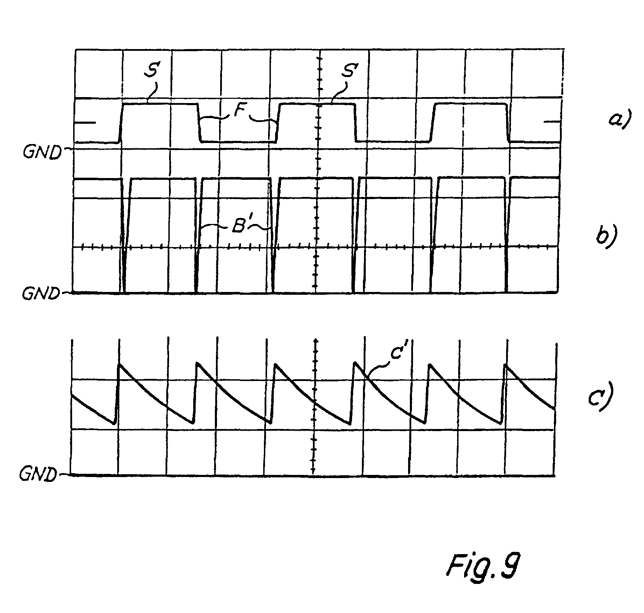

Ferner wird, über einen Kondensator 53 und einen mit diesem in Reihe geschalteten Widerstand 54, praktisch nur der Wechselanteil des Signals am Punkt C dem Minuseingang des Operationsverstärkers 50 zugeführt. Dieser Wechselanteil ist in Fig. 3d dargestellt und kann am Punkt D gemessen werden. Der Minuseingang des Operationsverstärkers 50 ist außerdem über einen Widerstand 52 mit dem Ausgang 25 des Operationsverstärkers 50 verbunden. Durch den Rückführwiderstand 52 des Operationsverstärkers 50 ergibt sich an dessen Minuseingang eine Sägezahnspannung, die nicht kleiner als das Potential 0 wird, wie in Fig. 3d und in Fig. 8, Signal D, dargestellt. Jedoch ist klar, daß durch den Kondensator 53 nur der Wechselanteil des Signals C übertragen wird, da ein Kondensator für ein Gleichspannungssignal wie ein Isolator wirkt.

Der Operationsverstärker 50 subtrahiert das Signal gemäß Fig. 3d vom Signal gemäß Fig. 3c, und übrig bleibt, am Ausgang E des Operationsverstärkers 50, der in Fig. 3e dargestellte Gleichanteil des Signals gemäß Fig. 3c, also im wesentlichen eine Gleichspannung, welche direkt dem Regler 26 zugeführt wird. Die Arbeitsweise ist also die eines Subtrahierers, der das Signal am Punkt D vom Signal am Punkt C subtrahiert, so daß keine wesentlichen zeitlichen Verzögerungen, sogenannte Signallaufzeiten, entstehen. Naturgemäß hat das Signal in Fig. 3e bei niedrigen Drehzahlen eine gewisse Restwertigkeit (ripple), was unvermeidlich ist.

Der Regler 26 enthält ebenfalls einen Operationsverstärker 60, dessen Minuseingang, über einen Widerstand 62, das Signal am Ausgang 25 des Komparators 50 zugeführt wird. Seinem Pluseingang wird, über einen Widerstand 64, das Signal vom Sollwertgeber 30 zugeführt, das ebenfalls ein Gleichspannungssignal ist.

Zwischen dem Ausgang 28 des Operationsverstärkers 60 und dessen Minuseingang liegt die Serienschaltung eines Widerstands 66 und eines Kondensators 68, und dazu parallel ein Widerstand 70. Am Ausgang 28 erhält man also ein Signal, welches ein Maß für die Abweichung zwischen dem analogen Drehzahl-Istwertsignal am Ausgang 25 und dem Drehzahl-Sollwertsignal am Geber 30 ist, so daß die Drehzahl auf den am Sollwertgeber 30 eingestellten Wert geregelt wird. Beim Ausführungsbeispiel handelt es sich um einen PI-Regler, doch sind selbstverständlich auch andere Reglerarten möglich.

Für die Schaltung nach Fig. 2 werden nachfolgend einige bevorzugte Werte angegeben:

| | |
|---|---|
| Kondensator 32 | 1nF |
| Widerstände 33, 44, 70 | 100 kOhm |
| Transistor 35 | BC857B |
| Widerstände 37, 66 | 220 Ohm |
| Kondensatoren 39, 68 | 22 nF |
| Widerstände 48, 52, 54, 56 | 470 kOhm |

(fortgesetzt)

| Kondensator 53 | 100 nF |
|---|---|
| Operationsverstärker 50 und 60 | Doppelverstärker LM2904 |
| Widerstände 62, 64 | 22 k0hm |

Fig. 4 zeigt, daß das Signal E am Ausgang des Operationsverstärkers 50 bei geeigneter Dimensionierung der Komponenten 39 und 44 weitgehend eine lineare Funktion der Drehzahl ist. Dabei ist der lineare Teil 75 der Mittelabschnitt einer S-förmigen Kurve, wie in Fig. 4 dargestellt. Die geeigneten Werte fUr den Kondensator 39 und den Widerstand 44 lassen sich durch einen Iterationsvorgang bestimmen, oder durch einfaches Probieren. Hierzu benötigt man folgende Werte:

X = Zahl der Impulse des Signals 19 pro Rotorumdrehung
Der Wert X hängt von der Polpaarzahl des Rotors 14 ab
N = Drehzahl in U/min
$U_b$ = Betriebsspannung (V)
R = Wert des Widerstands 44 in 0hm
C = Wert des Kondensators 39 in Farad

Es gilt dann

$$E(N) = U_b - \left[ U_b \left(1 - \exp\left(- \frac{60}{N \cdot C \cdot R \cdot X}\right)\right) \right]$$

Die Kennlinie 75 kann etwa bis zum Wert der halben Betriebsspannung $U_b$ linearisiert werden, wie in Fig. 4 angegeben. Sie ist berechnet für folgende Werte:

Ub = 12 V
R = 100 000 0hm
C = 22 x $10^{-9}$ F
X = 6

Für Bereiche mit niederen Drehzahlen werden ggf. andere Werte von R und C benötigt. Ein linearer Zusammenhang zwischen der Drehzahl und der Höhe des Signals E ist günstig für die genaue Einstellung der gewünschten Drehzahl.
Zu ergänzen ist, daß die Funktion der Auswerteschaltung 24 in weiten Grenzen unabhängig ist von der Höhe der Betriebsspannung $U_b$, z.B. im Bereich 5...30 V.

Fig. 5

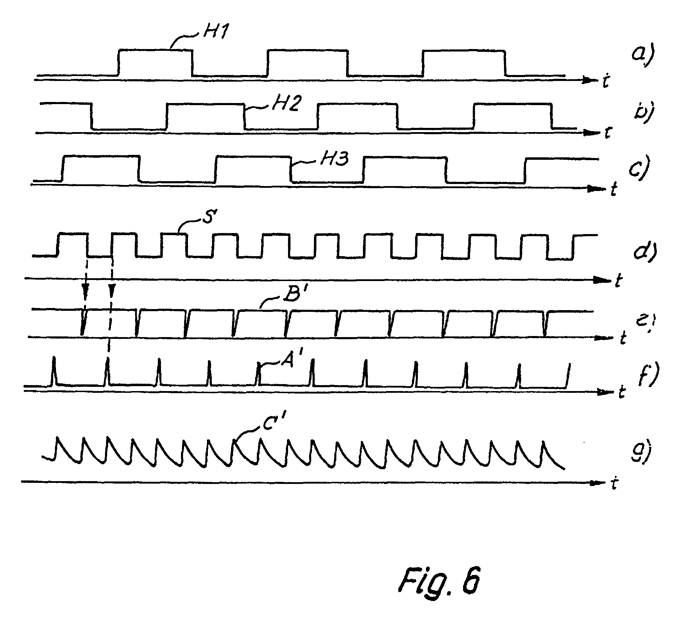

Eine wesentliche Verbesserung der Qualität der Regelung bei niedrigen Drehzahlen ergibt sich, wenn bei einem dreisträngigen Motor, wie er in Fig. 1 dargestellt ist, die Signale der drei Hall-ICs 15, 16 und 17 addiert werden. Dies geschieht gemäß Fig. 5 bevorzugt über drei Widerstände 80, 81 und 82, die von den Ausgängen dieser Hall-ICs zu einem Summierungspunkt 83 führen, der über einen Widerstand 85 an eine Plusleitung 86 angeschlossen ist. Am Punkt 83 erhält man dann ein Signal, das der Summe der Hallsignale H1 (am Hall-IC 15), H2 (am Hall-IC 16), und H3 (am Hall-IC 17) proportional ist und das die dreifache Frequenz des Signals H1 (oder H2 oder H3) hat. Die Fig. 6 zeigt in den Zeilen a) bis c) die drei Hallsignale H1, H2 und H3, und in Zeile d) deren Summe S. Durch diese Verdreifachung der Frequenz wird eine gute Regelung bis herab zu sehr niedrigen Drehzahlen möglich. Die gleiche Schaltung kann z.B. auch bei einem sechssträngigen elektronisch kommutierten Motor verwendet werden, wie man ohne weiteres versteht.
Das Signal S am Punkt 83 wird, in ähnlicher Weise wie in Fig. 2, in einer Auswerteschaltung 24' ausgewertet; die Teile der Auswerteschaltung 24', die mit der Auswerteschaltung 24 gemäß Fig. 2 übereinstimmen, sind mit denselben Bezugszeichen bezeichnet wie dort und werden gewöhnlich nicht nochmals beschrieben.
Zusätzlich wird das Signal S bei der Schaltung nach Fig. 5 über einen Schalter 88 einem Differenzierglied zugeführt, das einen Kondensator 90 - zwischen dem Punkt 83 und der Basis eines npn-Transistors 91 - und einen Widerstand 93 aufweist, der zwischen dieser Basis und der Minusleitung 42 angeordnet ist. Der Emitter des Transistors 91 ist ebenfalls mit der Minusleitung 42 verbunden, und sein Kollektor ist über einen Widerstand 95 mit der Basis des pnp-Transistors 35 verbunden.

| Bevorzugte Werte für die Schaltung nach Fig. 5: | |
| --- | --- |
| Kondensatoren 32 und 90 | 1nF |
| Kondensator 39 | 22 nF |
| Widerstände 33, 93 und 95 | 100 k0hm |
| Widerstände 44, 80, 81, 82, 85 | 22 k0hm |
| Widerstand 37 | 220 0hm |
| Transistor 35 | BC857B |
| Transistor 91 | BC847C |

Die übrigen Werte sind gleich wie in Fig. 2.

Arbeitsweise der Fig. 5

Fig. 6 zeigt in Zeile a) das Signal H1, in Zeile b) das Signal H2, und in Zeile c) das Signal H3. Durch das Widerstandsnetzwerk der (bevorzugt identisch großen) Widerstände 80, 81, 82 und 85 erhält man am Punkt 83 die Summenspannung S, wie sie in Zeile d) von Fig. 6 dargestellt ist. Im Vergleich zu den Signalen H1, H2, H3 hat diese Summenspannung die dreifache Frequenz, was besonders für die Regelung bei niedrigen Drehzahlen außerordentlich wertvoll und von großem Vorteil ist.

Durch das RC-Differenzierglied 32, 33 werden, wie bereits bei Fig. 2 beschrieben, an der Basis des Transistors 35 negative Nadelimpulse B' (Fig. 6e) jedesmal dann erzeugt, wenn das Signal S eine negative Flanke hat. Diese Nadelimpulse B' bewirken jeweils eine kurzzeitige Ladung des Kondensators 39, wie bei Fig. 2 beschrieben.

Durch das RC-Differenzierglied 90, 93 werden an der Basis des Transistors 91 positive Nadelimpulse A' (Fig. 6f) jedesmal dann erzeugt, wenn das Signal S eine positive Flanke hat. Diese Nadelimpulse A' machen den Transistor 91 jedesmal kurzzeitig leitend und erzeugen dadurch an der Basis des Transistors 35 ebenfalls kurze negative Nadelimpulse, die diesen Transistor kurzzeitig leitend machen und ebenfalls eine kurzzeitige Ladung des Kondensators 39 bewirken. (Diese Nadelimpulse sind in Fig. 6e nicht dargestellt).

Folglich erhält man am Kollektor des Transistors 35 ein Signal C' (Fig. 6g), das im Vergleich zum Signal gemäß Fig. 3c eine sechsmal höhere Frequenz hat.

Öffnet man den Schalter 88, so werden die Nadelimpulse A' nicht erzeugt, und die Frequenz des Signals C' (Fig. 6g) halbiert sich folglich. Die Darstellung in Fig. 6e entspricht dem Zustand bei geöffnetem Schalter 88.

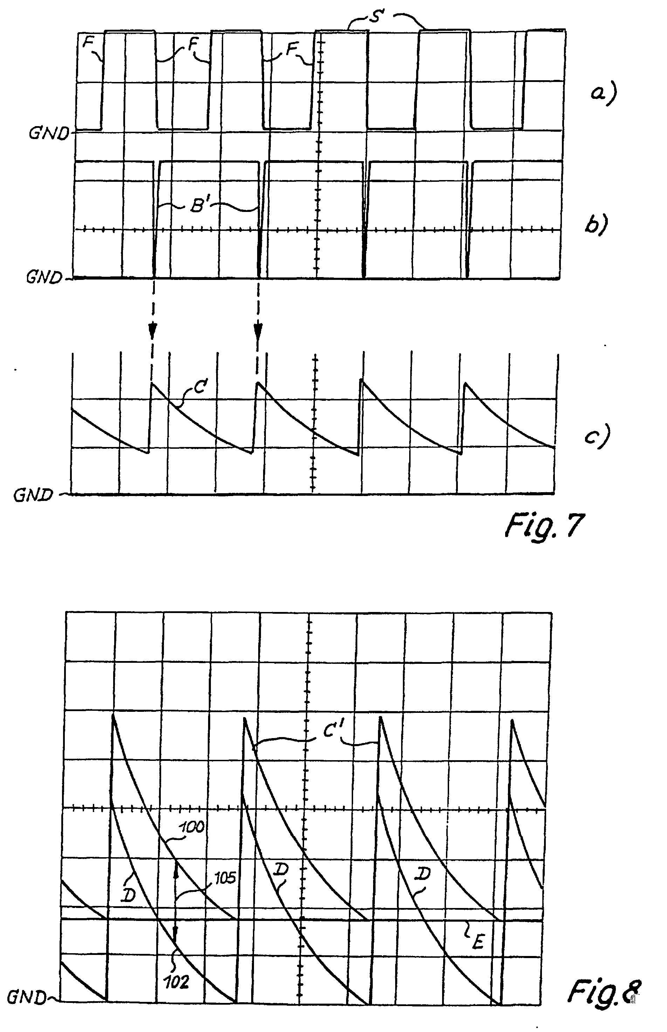

Die Fig. 7 bis 9 zeigen Oszillogramme, die mit der Schaltungsvariante Gemäß Fig. 5 aufgenommen wurden.

Fig. 7a zeigt das Signal S am Punkt 83 der Fig. 5. Fig. 7b zeigt die negativen Impulse B' an der Basis des Transistors 35 bei geöffnetem Schalter 88. Fig. 7c zeigt das Signal C' in Fig. 5, also das sägezahnförmige Signal am Kondensator 39.

Fig. 8 zeigt ein Oszillogramm, bei dem mit C' das Signal am Kollektor des Transistors 35 der Fig. 5 bezeichnet ist, also das Signal am Kondensator 39, das zwischen einem höheren und einem niedrigeren Wert schwankt, wobei aber das Potential am Kollektor des Transistors 35 stets positiver bleibt als das Potential der Minusleitung 42. Mit

D ist das Potential an der Stelle D der Fig. 5 bezeichnet, also der Wechselspannungsanteil des Signals C, der zwischen einem positiven Potential und dem Potential 0 schwankt. Und mit E ist die Differenz der Signale C' und D bezeichnet, also das Gleichspannungssignal am Ausgang E. Dabei ist zu beachten, daß der Kondensator 53 optimal an die Drehzahl angepaßt sein sollte, bei der der Regler hauptsächlich arbeitet, und dies kann durch einfache Versuche leicht festgestellt werden.

Der große Vorteil ist, daß sich durch die schrägen Flanken 100 des Signals C' und die schrägen Flanken 102 des Signals D eine eindeutige Potentialdifferenz 105 an praktisch allen Stellen ergibt, wie sie in Fig. 8 beispielhaft eingezeichnet ist, so daß sich am Ausgang des Operationsverstärkers 50 eine definierte Gleichspannung E ergibt.

Diese schrägen Flanken 100, 102 sind eine Folge der Integration am Kondensator 39.

Fig. 9 zeigt das Signal C' für den Fall, daß der Schalter 88 in Fig. 5 geschlossen ist. Dadurch verdoppelt sich die Frequenz der Signale C' im Vergleich zu Fig. 7, da in diesem Fall der Kondensator 39 sowohl bei den positiven wie bei den negativen Flanken F des Signals S einen Ladestromimpuls i Uber den Transistor 35 erhält, vgl. Fig. 9b.

Der große Vorteil ist, daß das Signal E in allen Fällen praktisch ohne zeitliche Verzögerung durch Differenzbildung zwischen zwei analogen Signalen erzeugt wird, so daß auch bei niedrigen Drehzahlen eine gute Qualität der Regelung erreicht werden kann. Naturgemäß wird durch die Maßnahmen nach Fig. 5 die Qualität der Regelung bei niedrigen Drehzahlen außerordentlich verbessert, da hierdurch die Frequenz des Signals S um den Faktor 3 erhöht wird und durch die Auswertung der positiven und der negativen Flanken die Frequenz des Signals C' (Fig. 9) nochmals verdoppelt wird.

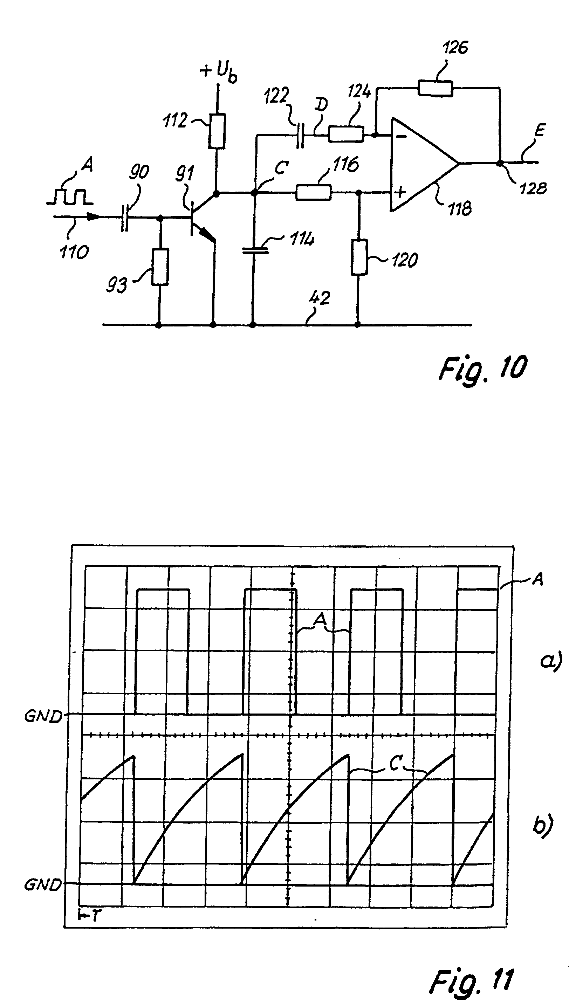

Die Fig. 10 bis 13 zeigen eine Variante, die nicht Teil der Erfindung ist, bei der das analoge Drehzahl-Istwertsignal E bei niedrigen Drehzahlen sein Maximum hat und mit steigender Drehzahl abnimmt.

Die Signale A am Eingang 110 der Schaltung nach Fig. 10 werden über ein Differenzierglied 90, 93 der Basis eines npn-Transistors 91 zugeführt. Insoweit ist diese Schaltung identisch aufgebaut wie diejenigen nach Fig. 5, weshalb dieselben Bezugszeichen verwendet werden wie dort.

Vom Kollektor des Transistors 91 führt ein Widerstand 112 zur positiven Betriebsspannung $U_b$, während sein Emitter mit der Minusleitung 42 verbunden ist. Zwischen der Minusleitung 42 und dem Kollektor des Transistors 91 ist ein Kondensator 114 angeordnet. Wird der Transistor 91 durch einen positiven Impuls an seiner Basis leitend gesteuert, so entlädt er den Kondensator 114. Ist der Transistor 114 gesperrt, so wird der Kondensator 114 über den Widerstand 112 aufgeladen (entsprechend einer e-Funktion).

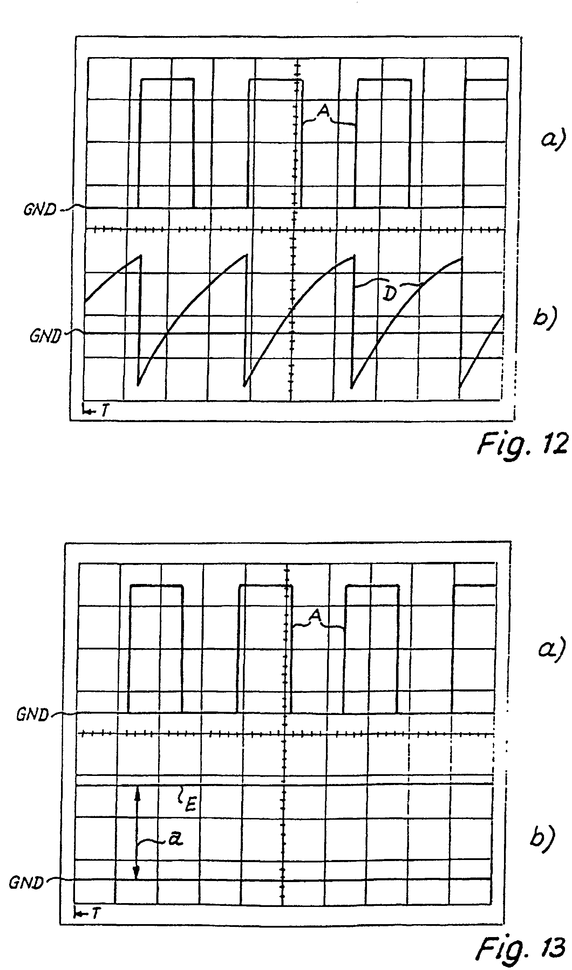

Fig. 11 zeigt bei a) das Oszillogramm des Eingangssignals A, z.B. von einem Hall-IC, und bei b) das Signal C am Kondensator 114, das also sägezahnförmig ist, jeweils von der Spannung Null (GND) aus ansteigt, und dieselbe Frequenz hat wie das Signal A. Je höher die Frequenz des Signals A wird, umso niedriger wird die Amplitude des Signals C, d.h. der Gleichspannungsanteil des Signals C nimmt mit steigender Drehzahl ab.

Das Signal C am Kollektor des Transistors 91 wird Uber einen Widerstand 116 dem Pluseingang eines Operationsverstärkers 118 zugeführt, der (wie bei den vorhergehenden Schaltungen) als Differenzverstärker wirksam ist. Der Pluseingang ist auch über einen Widerstand 120 mit der Minusleitung 42 verbunden.

Ferner wird das Signal C am Kollektor des Transistors 91 über die Serienschaltung eines Kondensators 122 und eines Widerstands 124 dem Minuseingang des Operationsverstärkers 118 zugeführt, der auch über einen Rückführwiderstand 126 mit dem Ausgang 128 des Operationsverstärkers 118 verbunden ist.

Fig. 12b zeigt das Signal D an der Verbindungsstelle zwischen dem Kondensator 122 und dem Widerstand 124. Es ist im Vergleich zum Signal C gemäß Fig. 11b um einen bestimmten Gleichspannungsanteil in negativer Richtung verschoben. Auf diesen Gleichspannungsanteil lädt sich der Kondensator 122 im Betrieb auf, und dieser Gleichspannungsanteil entspricht etwa dem Gleichspannungsanteil des Signals C. (In allen Figuren bedeutet GND = Ground, also das Potential 0 V).

Da das Signal C dem Pluseingang und das Signal D dem Minuseingang des Operationsverstärkers 118 zugeführt wird, erhält man an dessen Ausgang 128 eine Gleichspannung E, die in Fig. 13b dargestellt ist. (Die Fig. 12a und 13a zeigen ebenso wie Fig. 11a das Signal A am Eingang 110). Die Amplitude a (Fig. 13b) des Signals E nimmt mit steigender Drehzahl ab und ist am höchsten bei sehr niedrigen Drehzahlen.

| Bevorzugte Werte für die Schaltung nach Fig. 10 sind: | |
|---|---|
| Kondensator 90 | 1 nF |
| Widerstände 93, 112 | 100 K0hm |
| Transistor 91 | BC 847C |
| Kondensator 114 | 10 nF |
| Kondensator 122 | 100 nF |
| Widerstände 116, 120, 124, 126 | 470 k0hm. |

Naturgemäß sind im Rahmen der vorliegenden Erfindung vielfache Abwandlungen und Modifikationen möglich. Die Schaltungen nach den Fig. 2 und 5 werden im allgemeinen bevorzugt, da bei ihnen die Gleichspannung E mit steigender Drehzahl ansteigt und es möglich ist, eine lineare Beziehung zwischen der Drehzahl und dieser Spannung herzustellen, wie in Fig. 4 dargestellt.

## Patentansprüche

1. Verfahren zur Erzeugung eines analogen Drehzahl-Istwertsignals aus einem digitalen oder im wesentlichen digitalen Signal, dessen Frequenz einer zu erfassenden Drehzahl (N) proportional ist, mit folgenden Schritten:

   a) Durch einen Integrationsvorgang wird ausgehend von dem digitalen oder im wesentlichen digitalen Signal ein damit synchronisiertes Signal erzeugt, welches schräge Flanken aufweist;
   **dadurch gekennzeichnet, dass**

b) bei Schritt a) das synchronisierte Signal so erzeugt wird, dass es von einem vorgegebenen Wert (UB) schräg abfallende Flanken aufweist;

c) die Differenz aus diesem schräg abfallende Flanken aufweisenden Signal und seinem Wechselspannungsanteil gebildet wird, um ein analoges Drehzahl-Istwertsignal (E) zu erhalten, welches die Form einer im wesentlichen mit der Drehzahl (N) ansteigenden Gleichspannung hat.

2. Verfahren nach Anspruch 1, bei welchem das analoge Drehzahl-Istwertsignal (E) zumindest abschnittsweise im wesentlichen eine lineare Funktion der Drehzahl (N) ist.

3. Verfahren nach Anspruch 1 oder 2, bei welchem das analoge Drehzahl-Istwertsignal einem Regler zugeführt wird.

4. Verfahren nach einem der vorhergehenden Ansprüche, bei welchem - bei einem elektronisch kommutierten Motor mit mehreren Rotorstellungs-sensoren (15, 16, 17) - die Ausgangssignale (H1, H2, H3) von einer Mehrzahl dieser Sensoren (15, 16, 17) einander überlagert werden, um ein digitales oder im wesentlichen digitales Summensignal (S) mit einer gegenüber seinen Summanden erhöhten Frequenz zu erhalten.

5. Anordnung (24) zur Durchführung des Verfahrens nach einem der vorhergehenden Ansprüche, zur Erzeugung eines analogen Drehzahl-Istwertsignals (E) aus einem digitalen oder im wesentlichen digitalen Signal, dessen Frequenz einer zu erfassenden Drehzahl (N) proportional ist,

mit einer ersten Vorrichtung (32, 33, 35, 37), welcher das im wesentlichen digitale Signal zuführbar ist, und welche aus dem im wesentlichen digitalen Signal Ladestromimpulse (i) mit einer der zu erfassenden Drehzahl (N) proportionalen Häufigkeit erzeugt,

mit einer zweiten Vorrichtung (39, 44), welche einen als integrierendes Glied wirkenden Kondensator (39) aufweist, dem die Ladestromimpulse (i) zuführbar sind, wobei dem Kondensator ein Entladewiderstand (44) zugeordnet ist, so dass an ihm ein schräg abfallende Flanken aufweisendes Signal entsteht, und mit einer dritten Vorrichtung (48, 50, 52, 53, 54, 56), welche ein zur Differenzbildung zwischen zwei Signalen ausgebildetes Organ (50) aufweist, wobei einem Eingang des zur Differenzbildung ausgebildeten Organs (50) das schräg abfallende Flanken aufweisende Signal zuführbar ist,

und wobei dessen anderem Eingang ein Signal zuführbar ist, welches mindestens nahezu nur den Wechselspannungsanteil des schräg abfallende Flanken aufweisenden Signals enthält,

um so am Ausgang (25) dieses zur Differenzbildung ausgebildeten Organs (50) ein analoges Drehzahl-Istwertsignal (E) zu erhalten, welches die Form einer im wesentlichen mit der Drehzahl (N) ansteigenden Gleichspannung hat.

6. Anordnung nach Anspruch 5, bei welcher das zur Differenzbildung ausgebildete Organ als Operationsverstärker (50) ausgebildet ist.

7. Anordnung nach Anspruch 6, bei welcher der Wert des Kondensators (39) und des ihm zugeordneten Entladewiderstands (44) so gewählt sind, dass sich in einem interessierenden Drehzahlbereich eine im wesentlichen lineare Beziehung (75) zwischen dem analogen Drehzahl-Istwertsignal (E) und der Drehzahl (N) ergibt.

8. Anordnung nach einem oder mehreren der Ansprüche 4 bis 7, bei welcher das analoge Drehzahl-Istwertsignal einem Regler (26) zuführbar ist.

9. Anordnung nach Anspruch 8, bei welcher der Regler ein P-Regler, ein PI-Regler, oder ein PID-Regler ist.

10. Anordnung nach einem oder mehreren der Ansprüche 4 bis 9, bei welcher Mittel vorgesehen sind, um dem Kondensator (39) sowohl bei einer positiven wie bei einer negativen Flanke (F) des digitalen oder im wesentlichen digitalen Signals (S) einen Ladestromimpuls (i) zuzuführen.

11. Anordnung nach einem oder mehreren der vorhergehenden Ansprüche, bei welcher - bei einem elektronisch kommutierten Motor mit mehreren Rotorstellungssensoren (15, 16, 17) - die Ausgangssignale (H1, H2, H3) von einer Mehrzahl dieser Sensoren (15, 16, 17) einander überlagert werden, um ein digitales oder im wesentlichen digitales Summensignal (S) mit einer gegenüber seinen Summanden erhöhten Frequenz zu erhalten.

12. Anordnung nach Anspruch 11, mit einem elektronisch kommutierten Motor, der drei jeweils um etwa (120° el. + N x 360° el.) (N = 0,1,2 ...) relativ zueinander versetzte Sensoren (15, 16, 17) nach Art von Hallgeneratoren oder Hall-ICs aufweist, welche im Betrieb jeweils ein im wesentlichen digitales Ausgangssignal liefern,

## EP 0 712 002 B1

und mit einer Summiervorrichtung (80, 81, 82, 85) zur Summierung der Ausgangssignale (H1, H2, H3) dieser drei Sensoren (15, 16, 17),
um am Ausgang (83) dieser Summiervorrichtung ein Summensignal (S) zu erhalten, das im Vergleich zu einem Ausgangssignal eines dieser Sensoren (15, 16, 17) die dreifache Frequenz aufweist.

13. Anordnung nach Anspruch 11 oder 12, bei welcher sowohl die positiven wie die negativen Flanken (F) des Summensignals (S) zur Erzeugung eines analogen Drehzahl-Istwertsignals (E) ausgenützt werden.

**Claims**

1. Method for generating an analogue rotational speed actual value signal from a digital or essentially digital signal, the frequency of which is proportional to a rotational speed (N) to be measured, with the following steps,

   a) through an integration operation, starting from the digital or essentially digital signal, a signal synchronised with it is produced having oblique flanks, **characterised in that**
   b) in step a) the synchronised signal is produced so that it has flanks falling obliquely from a predetermined value (UB),
   c) the difference is formed from this signal having obliquely falling flanks and its alternating-current voltage component in order to obtain an analogue rotational speed actual value signal (E) which has the form of a direct-current voltage essentially rising with the rotational speed (N).

2. Method according to claim 1, in which the analogue rotational speed actual value signal (E) is at least in part essentially a linear function of the rotational speed (N).

3. Method according to claim 1 or 2, in which the analogue rotational speed actual value signal is fed to a controller.

4. Method according to one of the preceding claims, in which - with an electronically commutated motor with a plurality of rotor position sensors (15, 16, 17) - the output signals (H1, H2, H3) of a plurality of these sensors (15, 16, 17) are superimposed over one another in order to obtain a digital or essentially digital sum signal (S) with a frequency which is higher than its summands.

5. Arrangement (24) for implementing the method according to one of the preceding claims, for generating an analogue rotational speed actual value signal (E) from a digital or essentially digital signal the frequency of which is proportional to a rotational speed (N) to be measured,
   with a first device (32, 33, 35, 37) to which the essentially digital signal can be fed and which from the essentially digital signal generates charging current pulses (i) with a frequency proportional to the rotational speed (N) to be measured,
   with a second device (39, 44) which has a capacitor (39) which acts as an integrating member and to which the charging current pulses (i) can be fed, the capacitor having an associated discharge resistor (44) so that a signal having flanks falling obliquely is produced at it, and with a third device (48, 50, 52, 53, 54, 56) which has an element (50) designed to form the difference between two signals so that the signal having obliquely falling flanks can be fed to one input of the element (50) designed to form the difference and its other input can be fed with a signal which exhibits at least almost solely the alternating-current voltage component of the signal having obliquely falling flanks in order to obtain at the output (25) of this element (50) designed to form the difference an analogue rotational speed actual value signal (E) which has the form of a direct-current voltage essentially rising with the rotational speed (N).

6. Arrangement according to claim 5, in which the element designed to form the difference is embodied as an operation amplifier (50).

7. Arrangement according to claim 6, in which the value of the capacitor (39) and that of the discharge resistor (44) co-operating with it are chosen so that an essentially linear relation (75) is obtained between the analogue rotational speed actual value signal (E) and the rotational speed (N) in an interesting rotational speed range.

8. Arrangement according to one or more of claims 4 to 7, in which the analogue rotational speed actual value signal can be fed to a controller (26).

9.  Arrangement according to claim 8, in which the controller is a P controller, a PI controller or a PID controller.

10. Arrangement according to one or more of claims 4 to 9, in which means are provided to feed a charging current pulse (i) to the capacitor (39) both with a positive and with a negative flank (F) of the digital or essentially digital signal (S).

11. Arrangement according to one or more of the preceding claims, in which - with an electronically commutated motor with a plurality of rotor position sensors (15, 16, 17) - the output signals (H1, H2, H3) of a plurality of these sensors (15, 16, 17) are superimposed over one another in order to obtain a digital or essentially digital sum signal (S) with a frequency which is higher than its summands.

12. Arrangement according to claim 11, with an electronically commutated motor which has three sensors (15, 16, 17) which are in each case offset by approximately (120° el. + N x 360° el.) (N = 0,1,2 ...) in relation to one another like Hall generators or Hall ICs which in operation each supply an essentially digital output signal,
    and with a summing device (80, 81, 82, 85) for summing the output signals (H1, H2, H3) of these three sensors (15, 16, 17) in order to obtain at the output (83) of this summing device a sum signal (S) which has triple the frequency compared with an output signal of one of these sensors (15, 16, 17).

13. Arrangement according to claim 11 or 12, in which both the positive and the negative flanks (F) of the aggregate signal (S) are used to generate an analogue rotational speed actual value signal (E).


**Revendications**

1.  Procédé pour générer un signal analogique d'indication de la valeur instantanée d'un nombre de tours à partir d'un signal numérique ou essentiellement numérique, dont la fréquence est proportionnelle à un nombre de tours (N) à détecter, comprenant les étapes suivantes :

    a) génération par une opération d'intégration à partir du signal numérique ou essentiellement numérique d'un signal synchronisé avec celui-ci et présentant des flancs inclinés ;
    **caractérisé par le fait que**
    b) le signal synchronisé généré à l'étape a) présente des flancs descendants en biais à partir d'une valeur prédéfinie (UB) ;
    c) l'on forme la différence entre ce signal présentant des flancs descendants en biais et sa composante alternative afin d'obtenir un signal analogique de valeur instantanée du nombre de tours (E) qui a la forme d'une tension continue essentiellement croissante avec le nombre de tours (N).

2.  Procédé selon la revendication 1 dans lequel le signal analogique de valeur instantanée du nombre de tours (E) est, au moins par sections, une fonction essentiellement linéaire du nombre de tours (N).

3.  Procédé selon la revendication 1 ou 2 dans lequel le signal analogique de valeur instantanée du nombre de tours est amené à un régulateur.

4.  Procédé selon l'une des revendications précédentes dans lequel, dans le cas d'un moteur à commutation électronique comportant plusieurs capteurs de position du rotor (15, 16, 17), les signaux de sortie (H1, H2, H3) de plusieurs de ces capteurs (15, 16, 17) sont superposés pour obtenir un signal de somme numérique ou essentiellement numérique (S) d'une fréquence supérieure à celle de ses opérandes de somme.

5.  Dispositif (24) pour réaliser le procédé selon l'une des revendications précédentes,
    pour générer un signal analogique de valeur instantanée du nombre de tours (E) à partir d'un signal numérique ou essentiellement numérique, dont la fréquence est proportionnelle à un nombre de tours (N) à détecter,
    comportant un premier dispositif (32, 33, 35, 37) auquel est amené le signal essentiellement numérique et qui génère à partir du signal essentiellement numérique des impulsions de courant de charge (i) ayant une fréquence proportionnelle à un nombre de tours (N) à détecter,
    comportant un deuxième dispositif (39, 44) qui présente un condensateur (39) agissant comme élément intégrateur, auquel sont amenées les impulsions de courant de charge (i), ce condensateur étant associé à une résistance de décharge (44) de telle manière qu'il y apparaît un signal présentant des flancs descendants en biais,
    et comportant un troisième dispositif (48, 50, 52, 53, 54, 56) qui présente un organe (50) conçu pour former la différence entre deux signaux, le signal présentant des flancs descendants en biais étant amené à une entrée de l'organe (50) conçu pour former la différence

et un signal qui contient au moins presque uniquement la composante alternative du signal présentant des flancs descendants en biais étant amené à l'autre entrée de l'organe (50),

de façon à obtenir à la sortie (25) de cet organe (50) conçu pour former la différence un signal analogique de valeur instantanée du nombre de tours (E) qui a la forme d'une tension continue essentiellement croissante avec le nombre de tours (N).

6. Dispositif selon la revendication 5 dans lequel l'organe conçu pour former la différence est un amplificateur opérationnel (50).

7. Dispositif selon la revendication 6 dans lequel la valeur du condensateur (39) et celle de la résistance de décharge (44) qui lui est associée sont choisies de telle sorte qu'il en résulte, dans la plage de nombres de tours intéressante, une relation essentiellement linéaire (75) entre le signal analogique de valeur instantanée du nombre de tours (E) et le nombre de tours (N).

8. Dispositif selon une ou plusieurs des revendications 4 à 7 dans lequel le signal analogique de valeur instantanée du nombre de tours est amené à un régulateur (26).

9. Dispositif selon la revendication 8 dans lequel le régulateur est un régulateur P, un régulateur PI ou un régulateur PID.

10. Dispositif selon une ou plusieurs des revendications 4 à 9 dans lequel sont prévus des moyens pour amener une impulsion de courant de charge (i) au condensateur (39) aussi bien sur un flanc positif que sur un flanc négatif (F) du signal numérique ou essentiellement numérique.

11. Dispositif selon une ou plusieurs des revendications précédentes dans lequel, dans le cas d'un moteur à commutation électronique comportant plusieurs capteurs de position du rotor (15, 16, 17), les signaux de sortie (H1, H2, H3) de plusieurs de ces capteurs (15, 16, 17) sont superposés pour obtenir un signal de somme numérique ou essentiellement numérique (S) d'une fréquence supérieure à celle de ses opérandes de somme.

12. Dispositif selon la revendication 11, comportant un moteur à commutation électronique qui présente trois capteurs (15, 16, 17) décalés les uns par rapport aux autres d'environ (120° él. + N x 360° él.) (N = 0, 1, 2 ...) à la manière de générateurs à effet Hall ou de CI à effet Hall, lesquels délivrent en fonctionnement un signal de sortie essentiellement numérique,

et comportant un dispositif additionneur (80, 81, 82, 85) pour sommer les signaux de sortie (H1, H2, H3) de ces trois capteurs (15, 16, 17),

de façon à obtenir à la sortie (83) de ce dispositif additionneur un signal de somme (S) qui présente une fréquence triple de celle du signal de sortie d'un de ces capteurs (15, 16, 17).

13. Dispositif selon la revendication 11 ou 12 dans lequel sont exploités aussi bien les flancs positifs que les flancs négatifs (F) du signal de somme (S) pour générer un signal analogique de valeur instantanée du nombre de tours (E).

Fig. 1

Fig.2

EP 0 712 002 B1

13

Fig. 3

Fig. 4

EP 0 712 002 B1

Fig.5

15

Fig. 6

Fig. 7

Fig. 8

Fig.9

Fig. 10

Fig. 11

Fig. 12

Fig. 13